# NEUE EUROPÄISCHE PATENTSCHRIFT

(11) **EP 1 373 693 B2**
(45) Veröffentlichungstag und Bekanntmachung des Hinweises auf die Entscheidung über den Einspruch: **26.05.2010**
(45) Hinweis auf die Patenterteilung: 12.01.2005
(21) Anmeldenummer: 02721983.1
(22) Anmeldetag: 26.02.2002
(51) Int. Cl.: F01N 11/00

(54) **VERFAHREN UND VORRICHTUNG ZUR ÜBERWACHUNG EINES ABGASNACHBEHANDLUNGSSYSTEMS**
METHOD AND DEVICE FOR MONITORING AN EXHAUST GAS TREATMENT SYSTEM
PROCEDE ET DISPOSITIF DE CONTROLE D'UN SYSTEME DE TRAITEMENT ULTERIEUR DE GAZ D'ECHAPPEMENT

(30) Priorität: 17.03.2001 DE 10113010
(43) Veröffentlichungstag der Anmeldung: 02.01.2004
(73) Patentinhaber: ROBERT BOSCH GMBH, 70442 Stuttgart (DE)
(72) Erfinder: PLOTE, Holger, 4017 Linz (AT); KRAUTTER, Andreas, 71711 Steinheim (DE); WALTER, Michael, 70806 Kornwestheim (DE); SOJKA, Juergen, 70839 Gerlingen (DE)
(74) Vertreter: Lochmahr, Gunnar
(86) Internationale Anmeldenummer: PCT/DE2002/000697
(87) Internationale Veröffentlichungsnummer: WO 2002/075128

(56) Entgegenhaltungen:
- EP-A- 1 052 385
- US-A- 5 133 184
- US-A- 5 592 815

## Beschreibung

### Stand der Technik

Die Erfindung betrifft ein Verfahren und eine Vorrichtung zur Überwachung eines Abgasnachbehandlungssystems.

Aus der DE 199 062 87 sind ein Verfahren und eine Vorrichtung zur Steuerung eines Abgasnachbehandlungssystems bekannt. Bei dem dort beschriebenen System wird ein Partikelfilter eingesetzt, der im Abgas enthaltene Partikel ausfiltert. Dieser Partikelfilter muss in regelmäßigen Abständen regeneriert werden. Hierzu ist vorgesehen, dass die Abgastemperatur erhöht und dadurch ein Abbrand der Partikel ausgelöst wird. Zur Erhöhung der Abgastemperatur wird üblicherweise ein Oxidationskatalysator eingesetzt. Zur Regeneration ist vorgesehen, dass Kohlenwasserstoffe in das Abgas eingebracht werden, die dann in dem Oxidationskatalysator reagieren und zu einer Erhöhung der Abgastemperatur führen.

An ein solches Abgasnachbehandlungssystem werden sehr hohe Anforderungen an die Wirksamkeit und Verfügbarkeit gestellt. Die Wirksamkeit des Oxidationskatalysators nimmt mit der Einsatzdauer ab. Die Verschlechterung der Wirksamkeit ist von der Qualität der Oxidationsschicht und vor allem von den vorherrschenden Betriebsbedingungen abhängig und damit nicht vorhersehbar. Um den Ausfall und/oder die Verschlechterung der Wirkungsweise des Oxidationskatalysators und damit verbunden einer möglichen Erhöhung der Emissionen zu erkennen, ist eine Überprüfung des Oxidationskatalysators erforderlich. Siehe auch die Patentanmeldung US 5 133 184 A.

### Vorteile der Erfindung

Die Erfindung bezicht sich auf ein Verfahren zur Diagnose eines Abgasnachbehandlungssystems gemäss Anspruch 1.

Weitere besonders vorteilhafte Ausgestaltungen sind in den Unteransprüchen gekennzeichnet.

### Zeichnung

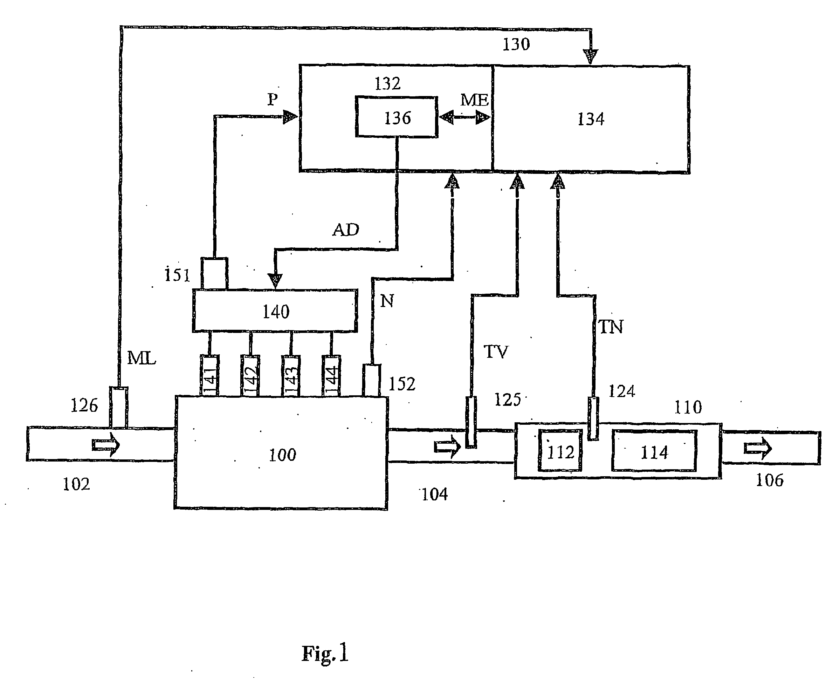

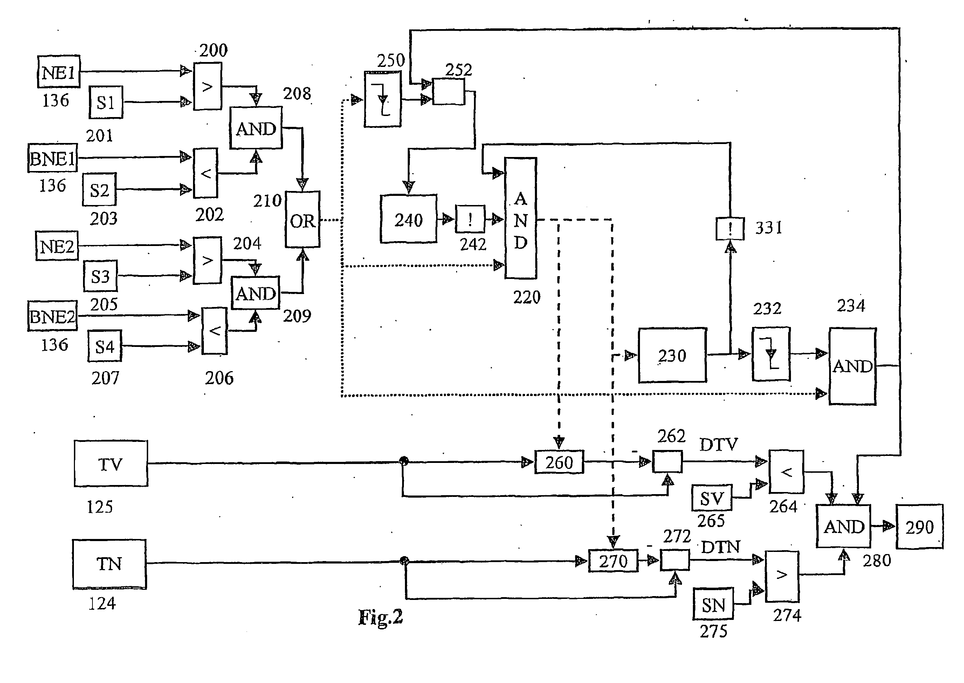

Die Erfindung wird nachstehend anhand einer Zeichnung dargestellt und ihre Ausführungsformen erläutert. Es zeigen Figur 1 ein Block-Diagramm der erfindungsgemäßen Vorrichtung und Figur 2 ein Ablauf-Diagramm der erfindungsgemäßen Vorgehensweise.

### Beschreibung der Ausführungsbeispiele

Die erfindungsgemäße Vorgehensweise wird im folgenden am Ausführungsbeispiel eines Oxidationskatalysators beschrieben. Die Vorgehensweise ist aber nicht auf die Anwendung bei Oxidationskatalysatoren beschränkt. Sie kann bei allen Abgasnachbehandlungssystemen eingesetzt werden, bei denen eine Korrelation zwischen einem bestimmten Betriebszustand und einer zugehörigen Änderung einer Betriebskenngröße aufgrund der Wirkung des Abgasnachbehandlungssystems besteht.

Besonders vorteilhaft ist die Verwendung der Vorgehensweise bei einem Abgasnachbehandlungssystems, das einen Oxidationskatalysator und einen nachfolgenden Partikelfilter umfaßt.

Im folgenden wird die erfindungsgemäße Vorrichtung am Beispiel einer selbstzündenden Brennkraftmaschine dargestellt, bei der die Kraftstoffzumessung mittels eines sogenannten Common-Rail-Systems gesteuert wird. Die erfindungsgemäße Vorgehensweise ist aber nicht auf diese Systeme beschränkt. Sie kann auch bei anderen Brennkraftmaschinen eingesetzt werden.

Mit 100 ist eine Brennkraftmaschine bezeichnet, die über eine Ansaugleitung 102 Frischluft zugeführt bekommt und über eine Abgasleitung 104 Abgase abgibt. In der Abgasleitung 104 ist ein Abgasnachbehandlungsmittel 110 angeordnet, von dem die gereinigten Abgase über die Leitung 106 in die Umgebung gelangen. Das Abgasnachbehandlungsmittel 110 umfaßt im wesentlichen einen sogenannten Vorkatalysator 112 und stromabwärts einen Filter 114. Vorzugsweise ist zwischen dem Vorkatalysator 112 und dem Filter 114 ein Temperatursensor 124 angeordnet, der ein Temperatursignal TN bereitstellt. Ferner ist ein Temperatursensor 125 vor dem Vorkatalysator 112 angeordnet, der ein Temperatursignal TV bereitstellt.

Bei einer vorteilhaften Ausgestaltung kann auch vorgesehen sein, dass eines und/oder beide Temperatursignale ausgehend von anderen Betriebskenngrößen berechnet und/oder simuliert werden.

Ferner kann in der Ansaugleitung 102 ein Sensor 126 angeordnet, der ein Signal erfasst, das die Menge ML der zugeführten Frischluftmenge charakterisiert. Hierzu wird vorzugsweise ein sogenannter Luftmengenmesser eingesetzt.

Der Brennkraftmaschine 100 wird über eine Kraftstoffzumeßeinheit 140 Kraftstoff zugemessen. Diese mißt über Injektoren 141, 142, 143 und 144 den einzelnen Zylindern der Brennkraftmaschine 100 Kraftstoff zu. Vorzugsweise handelt es sich bei der Kraftstoffzumeßeinheit um ein sogenanntes Common-Rail-System. Eine Hochdruckpumpe fördert Kraftstoff in einen Druckspeicher. Vom Speicher gelangt der Kraftstoff über die Injektoren in die Brennkraftmaschine.

An der Kraftstoffzumeßeinheit 140 sind verschiedene Sensoren 151 angeordnet, die Signale bereitstellen, die den Zustand der Kraftstoffzumeßeinheit charakterisieren. Hierbei handelt es sich bei einem Common-Rail-System beispielsweise um den Druck P im Druckspeicher. An der Brennkraftmaschine 100 sind Sensoren 152 angeordnet, die den Zustand der Brennkraftmaschine charakterisieren. Hierbei handelt es sich vorzugsweise um einen Drehzahlsensor, der ein Drehzahlsignal N bereitstellt und um weitere Sensoren, die nicht dargestellt sind.

Die Ausgangssignale dieser Sensoren gelangen zu einer Steuerung 130, die als eine erste Teilsteuerung 132 und eine zweite Teilsteuerung 134 dargestellt ist. Vorzugsweise bilden die beiden Teilsteuerungen eine bauliche Einheit. Die erste Teilsteuerung 132 steuert vorzugsweise die Kraftstoffzumeßeinheit 140 mit Ansteuersignalen AD, die die Kraftstoffzumessung beeinflussen, an. Hierzu beinhaltet die erste Teilsteuerung 132 eine Motorsteuerung 136. Diese liefert ein Signal ME, das die einzuspritzende Menge charakterisiert, an die zweite Teilsteuerung 134.

Die zweite Teilsteuerung 134 steuert vorzugsweise das Abgasnachbehandlungssystem und erfaßt hierzu die entsprechenden Sensorsignale. Desweiteren tauscht die zweite Teilsteuerung 134 Signale, insbesondere über die eingespritzte Kraftstoffmenge ME, mit der ersten Teilsteuerung 132 aus. Vorzugsweise nutzen die beiden Steuerungen gegenseitig die Sensorsignale und die internen Signale.

Die erste Teilsteuerung, die auch als Motorsteuerung 132 bezeichnet wird, steuert abhängig von verschiedenen Signalen, die den Betriebszustand der Brennkraftmaschine 100, den Zustand der Kraftstoffzumeßeinheit 140 und die Umgebungsbedingung charakterisieren sowie einem Signal, das die von der Brennkraftmaschine gewünschte Leistung und/oder Drehmoment charakterisiert, das Ansteuersignal AD zur Ansteuerung der Kraftstoffzumeßeinheit 140. Solche Einrichtungen sind bekannt und vielfältig eingesetzt.

Insbesondere bei Dieselbrennkraftmaschinen können Partikelemissionen im Abgas auftreten. Hierzu ist es vorgesehen, dass die Abgasnachbehandlungsmittel 110 diese aus dem Abgas herausfiltern. Durch diesen Filtervorgang sammeln sich in dem Filter 114 Partikel an. Diese Partikel werden dann in bestimmten Betriebszuständen, Beladungszuständen und/oder nach Ablauf bestimmter Zeiten oder Zählerstände für Kraftstoffmenge oder Fahrstrecke verbrannt, um den Filter zu reinigen. Hierzu ist üblicherweise vorgesehen, dass zur Regeneration des Filters 114 die Temperatur im Abgasnachbehandlungsmittel 110 soweit erhöht wird, dass die Partikel verbrennen.

Zur Temperaturerhöhung ist der Vorkatalysator 112 vorgesehen. Die Temperaturerhöhung erfolgt beispielsweise dadurch, dass der Anteil an unverbrannten Kohlenwasserstoffen im Abgas erhöht wird. Diese unverbrannten Kohlenwasserstoffe reagieren dann in dem Vorkatalysator 112 und erhöhen dadurch dessen Temperatur und damit auch die Temperatur des Abgases, das in den Filter 114 gelangt.

Der Kern der Erfindung ist darin zu sehen, dass eine Oxidation von gezielt zugegebenen Kohlenwasserstoffen an der katalytischen Beschichtung des Katalysators aufgrund der Temperaturerhöhung infolge der exothermen Reaktion erkannt wird. Ein sich verschlechternder Oxidationskatalysator kann damit frühzeitig anhand eines verminderten Temperaturanstiegs erkannt werden.

Zur Fehlererkennung sind lediglich ein Temperatursensor vor und ein Temperatursensor nach dem Oxidationskatalysator notwendig. Bei einem Fahrzeug mit Partikelfilter ergibt sich kein höherer Aufwand an Hardware, da die Temperatursensoren bereits für die gezielte Regenerationssteuerung des Partikelfilters vorgesehen sind.

Die Diagnose des Oxidationskatalysators basiert auf der Auswertung des Temperaturverhaltens vor und hinter dem Katalysator im Falle einer einzuleitenden Partikelfilterregeneration. Für die Regeneration ist es notwendig, die Abgastemperatur zu erhöhen, um die im Filter eingelagerten Rußpartikel zu Oxidieren. Üblicherweise wird hierzu das Abgas mit Kohlenwasserstoffen angereichert, die beim Überschreiten einer bestimmten Temperatur am Oxidationskatalysator exotherm reagieren. Dies kann beispielsweise mit einer späten Nacheinspritzung als auch mit einer angelagerten Nacheinspritzung erreicht werden.

In Figur 2 ist die entsprechende Vorgehensweise anhand eines Ablauf-Diagramms beschrieben. Die erfindungsgemäße Vorgehensweise ist am Beispiel eines Oxidationskatalysators für einen Partikelfilter bei einer Dieselbrennkraftmaschine beschrieben, bei der zur Temperaturerhöhung eine oder zwei Nacheinspritzungen vorgesehen sein können. Die erfindungsgemäße Vorgehensweise ist jedoch nicht auf diese Anwendung beschränkt. Sie kann bei allen Systemen eingesetzt werden, bei denen durch entsprechende Vorgabe von Steuersignalen eine Temperaturerhöhung im Abgasnachbehandlungssystem bewirkt wird. Anstelle der Temperatur können auch andere Signale, die die Funktionsweise des Abgasnachbehandlungssystems charakterisieren, ausgewertet werden. Des weiteren ist die Vorgehensweise nicht auf Oxidationskatalysatoren beschränkt, sondern kann grundsätzlich bei Abgasnachbehandlungssystemen eingesetzt werden.

Von der Motorsteuerung 136 werden erste Signale NE1, die die Einspritzmenge einer ersten Nacheinspritzung und/oder Signale BNE1, die den Einspritzbeginn der ersten Nacheinspritzung charakterisiert, und Signale NE2 und/oder BNE2, die die Einspritzmenge und/oder den Einspritzbeginn einer zweiten Nacheinspritzung charakterisiert, vorgegeben. Die Signale NE1 gelangt zu einem Vergleicher 200, an dessen zweitem Eingang das Ausgangssignal S1 einer ersten Schwellwertvorgabe 201 anliegt. Ferner gelangt das Signal BNE1 zu einem zweiten Vergleicher 202, an dessen zweitem Eingang das Ausgangssignal S2 einer zweiten Schwellwertvorgabe 203 anliegt. Das Ausgangssignal des ersten Vergleichers 200 und des zweiten Vergleichers 202 gelangen über ein UND-Gatter 208 zu einem ODER-Gatter 210.

Das Signal NE2 gelangt zu einem Vergleicher 204, an dessen zweitem Eingang das Ausgangssignal S3 einer dritten Schwellwertvorgabe 205 anlegt. Ferner gelangt das Signal BNE2 zu einem zweiten Vergleicher 206, an dessen zweitem Eingang das Ausgangssignal S4 einer vierten Schwellwertvorgabe 207 anliegt. Die Ausgangssignale des Vergleichers 204 und des Vergleichers 206 gelangen über ein UND-Gatter 209 zu dem ODER-Gatter 210.

Das Ausgangssignal des ODER-Gatters 210 gelangt zum einen zu einer Abfallerkennung 250, zu einem UND-Gatter 220 sowie zu einem weiteren UND-Gatter 234. Das UND-Gatter 220 beaufschlagt unter anderem einen Timer 230 mit einem Startsignal. Der Timer 230 wiederum beaufschlagt über ein Negierglied 331 einen Eingang des UND-Gatters 220 sowie eine Abfallerkennung 232. Die Abfallerkennung 232 wiederum beaufschlagt den zweiten Eingang des UND-Gatters 234. Mit dem Ausgangssignal des UND-Gatters 234 wird eine Intakterkennung 290 beaufschlagt.

An einem weiteren Eingang des UND-Gatters 220 liegt ein Ausgangssignal eines Negiergliedes 242 an, das wiederum von einem zweiten Timer 240 beaufschlagt wird. Der Timer 240 wird, von einem Signal eines ODER-Gatters 252 gestartet, das zum einen von der Abfallerkennung 250 und von dem UND-Gatter 234 beaufschlagt wird.

Das Ausgangssignal TV des Temperatursensors 125 gelangt zum einen zu einem Speicherelement 260 und zu einem Differenzbilder 262. Das Speicherelement 260 wird mit dem Temperatursignal TV beschrieben, wenn das Ausgangssignal des UND-Gatters 220 wahr" ist. Das Ausgangssignal DTV des Differenzbilders 262 gelangt zu einem Vergleicher 264, an dessen zweiten Eingang das Ausgangssignal SV einer Schwellwertvorgabe 265 anliegt. Mit dem Ausgangssignal des Vergleichers 264 wird ein UND-Gatter 280 beaufschlagt, das wiederum die Intakterkennung 290 beaufschlagt.

Das Ausgangssignal TN des Temperatursensors 124 gelangt zum einen zu einem Speicherelement 270 und einem Differenzbilder 272. Das Speicherelement 270 wird mit dem Temperatursignal TN beschrieben, wenn das UND-Gatter 220 "wahr" ausgibt. Das Ausgangssignal DTN des Differenzbilders 272 gelangt zu einem Vergleicher 264, an dessen zweiten Eingang das Ausgangssignal SN einer Schwellwertvorgabe 275 anliegt. Mit dem Ausgangssignal des Vergleichers 274 wird das UND-Gatter 280 beaufschlagt, das wiederum die Intakterkennung 290 beaufschlagt.

Diese Einrichtung arbeitet wie folgt. Der Vergleicher 200 überprüft, ob die Einspritzmenge der ersten Nacheinspritzung NE1 größer als ein erster Schwellwert ist. Entsprechend überprüft der zweite Vergleicher 202 ob der Einspritbeginn BNE1 der ersten Nacheinspritzung kleiner als ein zweiter Schwellwert S2 ist. Am Ausgang des UND-Gatters 208 liegt ein Signal an, wenn die Einspritzmenge NE1 der ersten Nacheinspritzung größer als der Schwellwert S1 und der Einspritzbeginn später als ein zweiter Schwellwert S2 liegt. D.h. es liegt ein Signal an, wenn eine temperaturwirksame Nacheinspritzung vorliegt. Entsprechend liegt am zweiten UND-Gatter 209 ein Signal an, wenn die Kraftstoffmenge NE2 und der Einspritzbeginn BNE2 einer zweiten Nacheinspritzung größer bzw. später als die Schwellwerte S3 und S4 sind. Am Ausgang des ODER-Gatters 210 liegt ein Signal an, wenn eine erste Nacheinspritzung NE1 oder eine zweite Nacheinspritzung NE2 erkannt wurde.

Bei einer vereinfachten Ausführungsform, die insbesondere bei Systemen mit lediglich einer Nacheinspritzung eingesetzt wird, entfallen die Elemente 204 bis 209.

Ist dies der Fall, das heißt eine temperaturwirksame Nacheinspritzung liegt vor, und sind weitere Bedingungen erfüllt, die durch das UND-Gatter 220 geprüft werden, wird der erste Timer 230 gestartet und der aktuelle Wert der Temperatur TV im Speicher 260 abgelegt. Entsprechend wird im Speicher 270 der aktuelle Wert der Temperatur TN abgelegt.

Als zweite Bedingung wird von dem UND-Gatter 220 überprüft, ob ein zweiter Timer 240 gestartet ist. Dieser zweite Timer 240 wird gestartet, wenn die Überprüfung beendet wird oder wenn die Nacheinspritzung nicht mehr vorliegt, das heißt beendet ist. Das Ende der Nacheinspritzung wird durch die Abfallerkennung 250 erkannt. Ein Signal, das anzeigt, dass soeben eine Überprüfung durchgeführt wurde, liegt am Ausgang des UND-Gatters 234 an. Diese beiden Signale werden durch das ODER-Gatter 252 verknüpft. Wenn eines dieser Signale vorliegt, wird der Timer 240 gestartet, welcher verhindert, dass der Test vor Ablauf einer Mindestzeit erneut durchgeführt wird. Dies wird erreicht, indem als weitere Bedingung vom UND-Gatter 220 überprüft wird, ob der Timer 230 bereits läuft. Ist dies der Fall, wird der Timer ebenfalls nicht neu gestartet und der Test nicht durchgeführt.

Ist der Timer 230 abgelaufen und liegt noch eine Nacheinspritzung vor, dies wird durch die Abfallerkennung 232 und das UND-Gatter 234 erkannt, so wird überprüft, ob sich die Temperatursignale seit dem Start des ersten Timers 230 geändert haben. Hierzu bilden die Differenzbilder 262 und 272 die Differenz der aktuellen Temperaturwerte und der bei Start des Timers abgespeicherten Temperaturwerte. Diese werden dann in den Vergleichern 264 und 274 mit Schwellwerten verglichen.

Ist die Änderung der Temperatur TV vor dem Oxidationskatalysator kleiner als der Schwellwert SV und ist die Änderung der Temperatur nach dem Oxidationskatalysator größer als der Schwellwert SN, so wird von der Intakterkennung 290 ein fehlerfreier Oxidationskatalysator erkannt.

Die Diagnose des Oxidationskatalysators basiert auf der Erkennung mindestens einer der beiden Nacheinspritzungen. Unmittelbar nach der Aktivierung eine der Nacheinspritzungen werden die Temperaturen vor und nach dem Oxidationskatalysator gespeichert und der erste Timer 230 gestartet. Nach dem Ablauf des ersten Timers 230 wird die Differenz DTV und DTN der gespeicherten und der aktuellen Temperatur gebildet. Sofern hinter dem Oxidationskatalysator diese Differenz eine vorgebbare Größenordnung SN überschritten hat, wird der Oxidationskatalysator als ausreichend funktionsfähig erkannt. Dies erfolgt nur, wenn die Nacheinspritzungen während des ganzen Ablaufs des ersten Timers 230 ununterbrochen aktiv ist und die Temperaturdifferenz vor dem Oxidationskatalysator kleiner als der Grenzwert SV ist.

Mit der Überprüfung des Temperaturverhaltens vor dem Katalysator wird sichergestellt, dass die Temperaturerhöhungen nach dem Katalysator nicht auf einer Lasterhöhung und damit ebenfalls einer Erhöhung der Temperatur des Abgases zurückzuführen ist, sondern tatsächlich durch die exotherme Reaktion verursacht ist.

Dies bedeutet eine Diagnose erfolgt, solange die Nacheinspritzung erfolgt und die Temperatur vor dem zu überprüfenden Abgasnachbehandlungssystem sich nur unwesentlich ändert. Ein fehlerfreies Abgasnachbehandlungssystem wird erkannt, wenn bei Vorliegen der Nacheinspritzung innerhalb eines bestimmten Zeitraums, der durch den ersten Timer 230 definiert ist, die Temperatur nach dem zu überwachenden Abgasnachbehandlungssystem ansteigt und die Temperatur vor dem zu überwachenden Abgasnachbehandlungssystem nahezu konstant bleibt.

Mit zunehmender Alterung des Katalysators, insbesondere der katalytischen Schicht, wird sich die Umsetzrate der Kohlenwasserstoffe reduzieren und damit die Temperaturerhöhung immer geringer ausfallen, bis der Temperaturgradient unterschritten, und demzufolge der Katalysator als defekt erkannt wird.

Eine Deaktivierung der Nacheinspritzung und/oder der Nacheinspritzungen während der Timer 230 läuft, führt zu einem Abbruch der Diagnosefunktion. Gleichzeitig erfolgt mittels des zweiten Timers eine zeitliche Sperrung der Überprüfung bis eine erneute Diagnose zulässig ist, um wieder definierte Zustände sicherzustellen. Die Sperrung der Diagnose erfolgt auch nach einer abgeschlossenen Diagnose durch das Ausgangssignal des UND-Gatters 234.

Dies bedeutet es erfolgt keine Diagnose bzw. die Diagnose wird abgebrochen, wenn die Nacheinspritzung entfällt, eine Mindestwartezeit seit der letzten Diagnose noch nicht abgelaufen ist und/oder eine Mindestwartezeit seit dem letzten Abbruch der Diagnose noch nicht abgelaufen ist.

## Patentansprüche

1. Verfahren zur Diagnose eines in einer Abgasleitung (104) einer Brennkraftmaschine (100) angeordneten Abgasnachbehandlungssystems (112, 114), bei dem die Temperatur des Abgases vor dem Abgasnachbehandlungssystem (112, 114) von einem Temperatursensor (125) und die Temperatur hinter dem Abgasnachbehandlungssystem (112, 114) von einem Temperatursensor (124) gemessen wird, bei dem ein fehlerfreies Abgasnachbehandlungssystem (112,114) erkannt wird, wenn bei Vorliegen eines bestimmten Betriebszustands, eine erwartete Temperaturerhöhung der hinter dem Abgasnachbehandlungssystem (12,114) gemessenen Temperatur auf Grund einer Erhöhung des Anteils an unverbrannten Kohlenwasserstoffen im Abgas der Brennkraft maschine (100) auftritt, **dadurch gekennzeichnet, dass** die Diagnose nur erfolgt solange die Erhöhung des Anteils an unverbrannten Kohlenwasserstoffen erfolgt und wenn sich die von dem vor dem Abgasnachbehandlungssystem (112, 114) angeordneten Temperatursensor (125) gemessene Temperatur nach der Erhöhung des Anteils an unverbrannten Kohlenwasserstoffen innerhalb eines bestimmten Zeitraums nur unwesentlich ändert.

2. Verfahren nach Anspruch 1, **dadurch gekennzeichnet, dass** die Diagnose abgebrochen wird, wenn sich der Betriebszustand der Brennkraftmaschine (100) vor dem Abschluss der Diagnose ändert.

3. Verfahren nach Anspruch 1 oder 2, **dadurch gekennzeichnet, dass** die Diagnose erfolgt, wenn der Betriebszustand vorliegt, eine Mindestwarlezeit seit der letzten Diagnose abgelaufen ist und/oder eine Mindestwartezeit seit dem letzten Abbruch der Diagnose abgelaufen ist.

4. Verfahren nach einem der vorhergehenden Ansprüche, **dadurch gekennzeichnet, dass** die Erhöhung des Anteils an unverbrannten Kohlenwasserstoffen im Abgas der Brennkraftmaschine (100) durch eine temperaturwirksame Nacheinspritzung von Kraftstoff vorgenommen wird.

5. Verfahren nach Anspruch 4, **dadurch gekennzeichnet, dass** die Diagnose erfolgt, wenn die bei der Nacheinspritzung zugemessene Kraftstoffmenge und/oder die eingespritzt Zeitpunkten der Nacheinspritzung innerhalb bestimmter Bereiche liegen.

6. Verfahren nach einem der Ansprüche 4 und 5, **dadurch gekennzeichnet, dass** die Diagnose erfolgt, wenn eine temperaturwirksame Nacheinspritzung erkannt wird.

7. Verfahren nach Anspruch 6, **dadurch gekennzeichnet, dass** die Diagnose nur erfolgt, wenn die Nacheinspritzungen während des bestimmten Zeitraums ununterbrochen aktiv sind.

8. Verfahren nach einem der vorhergehenden Ansprüche, **gekennzeichnet durch** die Anwendung auf einen im Abgasnachbehandlungssystem (112, 114) angeordneten Oxidationskatalysator (112).

## Claims

1. Method for diagnosing an exhaust-gas aftertreatment system (112, 114) arranged in an exhaust pipe (104) of an internal combustion engine (100), in which the temperature of the exhaust gas upstream of the exhaust-gas aftertreatment system (112, 114) is measured by a temperature sensor (125), and the temperature downstream of the exhaust-gas aftertreatment system (112, 114) is measured by a temperature sensor (124), in which a fault-free exhaust-gas aftertreatment system (112, 114) is recognized if, when a defined operating state is present, an expected increase in the temperature measured downstream of the exhaust-gas aftertreatment system (112, 114) occurs on account of an increase in the proportion of unburnt hydrocarbons in the exhaust gas from the internal combustion engine (100), **characterized in that** the diagnosis is carried out only for as long as there is an increased proportion of unburnt hydrocarbons and when the temperature measured by the temperature sensor (125) arranged upstream of the exhaust-gas aftertreatment system (112, 114) only changes to an insignificant extent within a defined period of time after the increase in the proportion of unburnt hydrocarbons.

2. Method according to Claim 1, **characterized in that** the diagnosis is interrupted if the operating state of the internal combustion engine (100) changes before the diagnosis is concluded.

3. Method according to Claim 1 or 2, **characterized in that** the diagnosis is carried out when the operating state is present, a minimum waiting time has elapsed since the last diagnosis and/or a minimum waiting time has elapsed since the last interruption of the diagnosis.

4. Method according to one of the preceding claims, **characterized in that** the increase in the proportion of unburnt hydrocarbons in the exhaust gas from the internal combustion engine (100) is implemented by an afterinjection of fuel which has an effect on the temperature.

5. Method according to Claim 4, **characterized in that** the diagnosis is carried out when the quantity of fuel metered in during the afterinjection and/or the injection times for the afterinjection are within defined ranges.

6. Method according to one of Claims 4 and 5, **characterized in that** the diagnosis is carried out when an afterinjection which has an effect on the temperature is detected.

7. Method according to Claim 6, **characterized in that** the diagnosis is carried out only if the afterinjections are active without interruption throughout the defined period of time.

8. Method according to one of the preceding claims, **characterized by** its application to an oxidation catalytic converter (112) arranged in the exhaust-gas aftertreatment system (112, 114).

## Revendications

1. Procédé pour le diagnostic d'un système de post-traitement des gaz d'échappement (112, 114) disposé dans une conduite de gaz d'échappement (104) d'un moteur à combustion interne (100), dans lequel la température du gaz d'échappement avant le système de post-traitement des gaz d'échappement (112, 114) est mesurée par un capteur de température (125) et la température derrière le système de post-traitement des gaz d'échappement (112, 114) est mesurée par un capteur de température (124), dans lequel un système de post-traitement des gaz d'échappement (112, 114) sans erreur est détecté lorsque, en présence d'un état de fonctionnement déterminé, il se produit une augmentation de température attendue de la température mesurée derrière le système de post-traitement des gaz d'échappement (112, 114) sur la base d'une augmentation de la proportion d'hydrocarbures non brûlés dans le gaz d'échappement du moteur à combustion interne (100), **caractérisé en ce que** le diagnostic n'a lieu que tant qu'il se produit une augmentation de la proportion d'hydrocarbures non brûlés, et que la température mesurée par le capteur de température (125) disposé avant le système de post-traitement des gaz d'échappement (112, 114) ne varie que de manière négligeable après l'augmentation de la proportion d'hydrocarbures non brûlés durant un intervalle de temps déterminé.

2. Procédé selon la revendication 1, **caractérisé en ce que** le diagnostic est interrompu si l'état de fonctionnement du moteur à combustion interne (100) varie avant la fin du diagnostic.

3. Procédé selon la revendication 1 ou 2, **caractérisé en ce que** le diagnostic a lieu lorsque l'état de fonctionnement a lieu, qu'un temps d'attente minimum depuis le dernier diagnostic s'est écoulé et/ou qu'un temps d'attente minimum depuis la dernière interruption du diagnostic s'est écoulé.

4. Procédé selon l'une quelconque des revendications précédentes, **caractérisé en ce que** l'augmentation de la proportion d'hydrocarbures non brûlés dans le gaz d'échappement du moteur à combustion interne (100) est effectuée par une post-injection de carburant agissant sur la température.

5. Procédé selon la revendication 4, **caractérisé en ce que** le diagnostic a lieu quand la quantité de carburant dosée lors de la post-injection et/ou les instants d'injection de la post-injection se situent à l'intérieur de plages déterminées.

6. Procédé selon l'une quelconque des revendications 4 et 5, **caractérisé en ce que** le diagnostic a lieu quand une post-injection agissant sur la température est reconnue.

7. Procédé selon la revendication 6, **caractérisé en ce que** le diagnostic n'a lieu que lorsque les post-injections sont actives et non interrompues pendant tout l'intervalle de temps déterminé.

8. Procédé selon l'une quelconque des revendications précédentes, **caractérisé par** l'application à un catalyseur d'oxydation (112) disposé dans le système de post-traitement des gaz d'échappement (112, 114).
